# EUROPÄISCHE PATENTSCHRIFT

(11) **EP 1 671 690 B1**
(45) Veröffentlichungstag und Bekanntmachung des Hinweises auf die Patenterteilung: **11.01.2012**
(21) Anmeldenummer: 05110370.3
(22) Anmeldetag: 04.11.2005
(51) Int. Cl.: B01D 27/08, B01D 27/10

(54) **Flüssigkeitsfilter**
Liquid filter
filtre de liquide

(30) Priorität: 16.12.2004 DE 102004061108
(43) Veröffentlichungstag der Anmeldung: 21.06.2006
(73) Patentinhaber: MANN+HUMMEL GmbH, 71638 Ludwigsburg (DE)
(72) Erfinder: Luka, Helmut, 71672, Marbach (DE); Schreckenberger, Dieter, 71672, Marbach (DE); Loos, Rainer, 71691, Freiberg (DE); Kolczyk, Markus, 74395, Mundelsheim (DE)

(56) Entgegenhaltungen:
- DE-A1- 1 611 120
- US-A- 2 888 141
- US-A- 2 995 249
- US-A- 4 324 660

## Beschreibung

### Stand der Technik

Die Erfindung betrifft einen Flüssigkeitsfilter, insbesondere Ölfilter für eine Brennkraftmaschine, nach dem Oberbegriff des Hauptanspruches 1.

Beim bekannten Stand der Technik werden häufig Ölwechselfilter, auch Spin-on Filter genannt, verwendet. Diese Ölwechselfilter werden dazu bevorzugt direkt an den Zylinderkopf einer Brennkraftmaschine angeschraubt und somit in den Ölkreislauf integriert. Im Zylinderkopf der Brennkraftmaschine ist dazu ein Innengewinde vorgesehen, in welches ein Schraubnippel mit einem sich axial vom Zylinderkopf weg erstreckenden Auβengewinde fest eingeschraubt wird. Auf diesen im Zylinderkopf angeschraubten Schraubnippel wird dann wiederum der Ölwechselfilter, welcher ein topfförmiges Gehäuse und eine Abschlussplatte mit einem konzentrisch darin angeordneten Gewinde aufweist, aufgeschraubt. Die Verwendung des Schraubnippels ist notwendig aufgrund fertigungstechnischer und materialtechnischer Schwierigkeiten, die es verhindern, direkt aus dem Zylinderkopf heraus ein Außengewinde zu formen.

Nachteilig ist hierbei, dass einerseits zwei Gewindepaarungen, also einmal die Gewindepaarung Zylinderkopf-Schraubnippel und zweitens die Gewindepaarung SchraubnippelÖlwechselfilter, verwendet werden müssen, was unter Umständen zu Dichtigkeitsproblemen führen kann und weiterhin Nachteile im verfügbaren Durchmesser für den im Inneren des Gewindes vorhandenen Auslass in sich birgt. Ein weiter Nachteil sind die hohen Kosten des Gewindenippels.

Aus US 2 995 249 A, US 2 888 141 A, DE 16 11 120 A1, WO 88/03047 A1 und EP 0 294 837 A2 sind jeweils Wechselfilter bekannt, welche über ein Mittel zur lösbaren Verbindung des Flüssigkeitswechselfilters mit einem Gegenpart verfügen, wobei sich das Mittel zur Verbindung axial über die Kontur des Flüssigkeitswechselfilters hinaus erstreckt.

Die Aufgabe der Erfindung ist es, einen Ölwechselfilter zu schaffen, welcher die oben genannten Nachteile vermeidet und einfach und kostengünstig herstellbar ist.

Ferner ist es Aufgabe der Erfindung, einen stehend angeordneten Wechselfilter bereitzustellen, welcher ein Ausfließen von Flüssigkeit beim Wechseln verhindert.

Die Aufgabe wird, ausgehend vom Oberbegriff des unabhängigen Anspruchs, durch dessen kennzeichnende Merkmale gelöst.

### Vorteile der Erfindung

Die Erfindung betrifft einen Flüssigkeitswechselfilter, insbesondere für das Schmieröl einer Brennkraftmaschine, welcher ein im Wesentlichen topfförmiges Gehäuse mit einer konzentrisch darin angeordneten Abflussöffnung für die gereinigte Flüssigkeit und wenigstens eine Zuflussöffnung für die zu reinigende Flüssigkeit aufweist. Zwischen Zuflussöffnung und Abflussöffnung ist dichtend ein bevorzugt zick-zack-förmig gefaltetes Rundfilterelement angeordnet, wobei das Gehäuse mit einer Deckelplatte verbunden ist und die Deckelplatte mit einer Abschlussplatte verbunden ist. Dabei ist die Deckelplatte bevorzugt über eine Bördelung mit dem topfförmigen Gehäuse verbunden und weiterhin wird die Abschlussplatte bevorzugt über ein formschlüssiges Verbindungsverfahren von der Deckelplatte gehalten. Konzentrisch im Bereich der Abschlussplatte ist ein Mittel zur lösbaren Verbindung des Flüssigkeitswechselfilters mit einem Gegenpart angeordnet, wobei sich das Mittel zur Verbindung axial über die Kontur des Flüssigkeitswechselfilters hinaus erstreckt. Durch diese Lösung ist es möglich, in vorteilhafter Weise auf den Gewindenippel zu verzichten. Die Verbindung zwischen Flüssigkeitswechselfilter und Zylinderkopf über das Mittel zur lösbaren Verbindung kann hierbei beispielsweise eine Bajonettverbindung, eine Schraubverbindung oder sonstige im Stand der Technik bekannte Verbindungsarten beinhalten, welche in der Lage sind, den Temperaturschwankungen und Druckpulsationen stand zu halten.

Gemäß einer vorteilhaften Ausgestaltung ist das Mittel zur lösbaren Verbindung ein konzentrischer Ringkragen mit einem Außengewinde. Dieser konzentrische Ringkragen mit dem Außengewinde kann dann direkt in das Innengewinde des Zylinderkopfes hineingeschraubt werden und macht so einen Gewindenippel überflüssig. Durch das Weglassen des Gewindenippels vergrößert sich gleichzeitig in vorteilhafter Weise der Durchmesser der Abflussöffnung der gereinigten Flüssigkeit.

Hierzu ist das Mittel zur lösbaren Verbindung einstückig aus der Abschlussplatte gebildet, wobei die Abschlussplatte weiterhin wenigstens eine Öffnung, die mit der wenigstens einen Zuflussöffnung korrespondiert, aufweist. Bevorzugt ist die Abschlussplatte hierbei aus einem tiefziehfähigen Metall, wobei dann der Ringkragen im Tiefziehverfahren gebildet wird. Im äußeren radialen Bereich der Abschlussplatte sind dann vorzugsweise gleichmäßig um den konzentrischen Ringkragen herum mehrere Öffnungen verteilt, durch die die zu reinigende Flüssigkeit in den Flüssigkeitswechselfilter gelangen kann.

Alternativ hierzu kann das Mittel zur lösbaren Verbindung lösbar oder unlösbar dichtend mit der Abschlussplatte verbunden sein. Auch diese Abschlussplatte weist weiterhin wenigstens eine Öffnung auf, die mit der wenigstens einen Zuflussöffnung korrespondiert. Das Mittel zur lösbaren Verbindung kann hierbei durch eine Schraubverbindung oder auch beispielsweise eine Schweißverbindung mit der Abschlussplatte verbunden werden. Die Anordnung der wenigstens einen Zuflussöffnung ist analog der oben beschriebenen Lösung ausgestaltbar.

Erfindungsgemäß ist in der Abflussöffnung im Bereich des Mittels zur lösbaren Verbindung ein Rücklaufsperrventil angeordnet, wobei das Rücklaufsperrventil axial außerhalb der wirksamen Filterelementfläche angeordnet ist. Das Rücklaufsperrventil verhindert ein Rücklaufen und damit ein Leerlaufen des Flüssigkeitswechselfilters bei stehender Brennkraftmaschine. Durch die Anordnung des Rücklaufsperrventils axial außerhalb der wirksamen Filterelementfläche wird ein größtmöglicher Anteil der Flüssigkeit am Ausfließen aus dem Wechselfilter gehindert. In vorteilhafter Weise lässt sich hier die axial über die Kontur des Flüssigkeitsfilters hinaus sich erstreckende Anordnung des Mittels zur Verbindung mit der Anordnung des Rücklaufsperrventils in eben diesem Bereich kombinieren, so dass gegenüber den bisherigen Lösungen ein signifikanter Vorteil zu erkennen ist.

Das Rücklaufsperrventil weist vorteilhaft ein Federmittel zur Herstellung eines Presssitzes auf einer Dichtfläche auf, wobei das Federmittel druckbelastet ist. Bevorzugt ist hier eine Schraubenfeder anzusetzen, welche sich an einer dazu vorgegebenen Kontur innerhalb des Flüssigkeitswechselfilters abstützt und einen Ventilsitz auf eine Dichtfläche aufpresst, wodurch die Dichtung hergestellt wird. Durch eine Variation des Federmittels lässt sich hier eine genaue Kennlinie zum Öffnen und Schließen des Ventils einstellen.

Alternativ hierzu kann das Rücklaufsperrventil auch ein Federmittel zur Herstellung eines Presssitzes auf einer Dichtfläche beinhalten, wobei das Federmittel zugbelastet ist. Durch eine kinematische Umkehrung ist es so möglich, beispielsweise eine zugbelastete Feder zu verwenden, welche ebenfalls korrespondierend mit einer Kontur innerhalb des Flüssigkeitswechselfilters verbunden ist, um einen Ventilteller unter Zug auf eine Dichtfläche zu pressen. Auch hier ist es möglich, über eine Auswahl des Federmittels die Kennlinie des Ventils zu beeinflussen.

Erfindungsgemäß weist die Deckelplatte am äußeren axialen Ende ein Dichtmittel zur axialen Abdichtung der Verbindung zwischen Flüssigkeitswechselfilter und Gegenpart auf. Bevorzugt ist hierbei in die Deckelplatte eine Art Nut eingelassen, in welche beispielsweise ein O-Ring oder eine abgestochene Vierkantdichtung eingelegt wird, welche beim Anschrauben des Flüssigkeitswechselfilters an den Gegenpart, wie bevorzugt ein Zylinderkopf, eine axiale Dichtung zwischen Flüssigkeitswechselfilter und Zylinderkopf herstellt.

Erfindungsgemäß umschließt die Deckelplatte einen Verdrängungsraum. Dieser Verdrängungsraum erstreckt sich ebenfalls wie das Mittel zur lösbaren Verbindung in Richtung des Zylinderkopfes und ist in einem Zuflussraum des Gegenparts, hier der Zylinderkopf, angeordnet. Dabei ist dann die Zuflussöffnung in der Deckelplatte im Bereich des Verdrängungsraumes angeordnet. Im Stand der Technik weist der Zylinderkopf im Bereich des Zuflusses eine umlaufende Nut auf, durch welche das Öl dem Flüssigkeitswechselfilter zugeführt wird. In dieser Ausgestaltung ist es so, dass dieser Nutraum durch den Verdrängungsraum des Flüssigkeitswechselfilters möglichst vollständig ausgefüllt ist, so dass ein möglichst großes Volumen im Flüssigkeitswechselfilter zur Verfügung steht.

Erfindungsgemäß ist in dem Verdrängungsraum eine Rücklaufsperrmembran angeordnet, derart, dass die Flüssigkeit aus dem ausgebauten Flüssigkeitswechselfilter nicht herauslaufen kann. Die Rücklaufsperrmembran besteht bevorzugt aus einem elastischen Kunststoff oder Gummi und ist bei laufender Brennkraftmaschine durch den Druck der einströmenden Flüssigkeit geöffnet. Bei stehender Brennkraftmaschine legt sich die Rücklaufsperrmembran über die Zuflussöffnungen und verschließt diese. Besonders vorteilhaft ist diese Lösung bei Flüssigkeitswechselfiltern, welche stehend angeordnet sind und verhindert in diesen Fällen ein Herauslaufen der Flüssigkeit aus dem Flüssigkeitswechselfilter beim Wechsel des Filters. Dadurch, dass die Deckelplatte den Verdrängungsraum bildet, wird auch die Flüssigkeit innerhalb des Verdrängungsraumes durch die Rücklaufsperrmembran am Ausfließen gehindert wird. In Kombination mit dem Rücklaufsperrventil wird so ein Ausfließen von Flüssigkeit bei stehend angeordnetem Flüssigkeitswechselfilter im Wartungsfall verhindert.

Es ist vorteilhaft, dabei die Rücklaufsperrmembran unlösbar mit der Deckelplatte zu verbinden. Dieses kann beispielsweise über ein Kleb- oder Schweißverfahren oder sonstige im Stand der Technik bekannte Verfahren erfolgen.

Diese und weitere Merkmale von bevorzugten Weiterbildungen der Erfindung gehen auβer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnungen

Weitere Einzelheiten der Erfindung werden in den Zeichnungen anhand von schematischen Beispielen beschrieben. Hierbei zeigen
- Figur 1: einen Halbschnitt durch einen zur Erläuterung abgebildeten Flüssigkeitswechselfilter,
- Figuren 2 - 4: Ausgestaltungen des Verdrängungsraumes eines Flüssigkeits- wechselfilters gemäß Figur 1,
- Figuren 5 und 6: Ausgestaltungen eines Rücklaufsperrventils eines Flüssigkeits- wechselfilters gemäß Figur 1 mit einer Zugfeder oder einer Druck- feder und
- Figuren 7 - 10: Ausgestaltungen des in Figur 1 angegebenen Bereichs Z, bei wel- chen eine Abdeckplatte einstückig einen Verbindungskragen zum Verbinden des Flüssigkeitswechselfilters mit einem Zylinderkopf ausbildet.

### Beschreibung der Ausführungsbeispiele

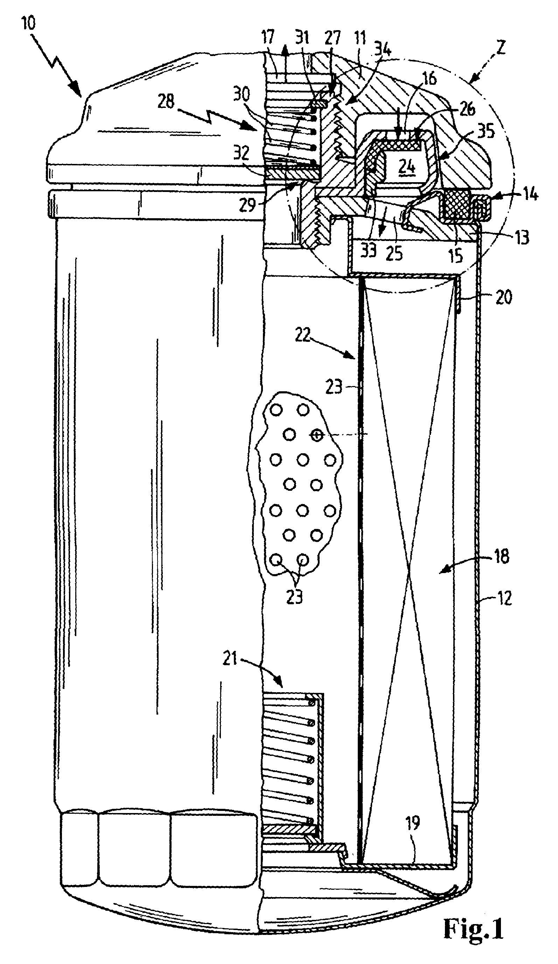

Die Figur 1 zeigt einen Flüssigkeitswechselfilter 10, welcher an einen Zylinderkopf 11 angeflanscht ist. Der Flüssigkeitswechselfilter 10 weist ein topfförmiges Gehäuse 12, bevorzugt aus Metall, es ist jedoch auch ein Gehäuse aus Kunststoff möglich, auf. Im Bereich der Verbindung zwischen Zylinderkopf 11 und Flüssigkeitswechselfilter 10 weist der Flüssigkeitswechselfilter 10 eine Abschlussplatte 13 auf, welche von einer Deckelplatte 14 gehalten wird. Das topfförmige Gehäuse 12 ist über eine Bördelung mit der Deckelplatte 14 verbunden und die Abschlussplatte 13 ist über eine Art Clinchen mit der Deckelplatte 14 verbunden. Zur Abdichtung der Verbindung zwischen Flüssigkeitswechselfilter 10 und Zylinderkopf 11 ist in der Deckelplatte 14 eine Vierkantdichtung 15 in eine Nut der Deckelplatte 14 eingelegt. Die Vierkantdichtung 15 dichtet den Flüssigkeitswechselfilter 10 axial gegenüber dem Zylinderkopf 11 ab. Weiterhin weist der Flüssigkeitswechselfilter 10 eine Zulauföffnung 16 und eine Ablauföffnung 17 auf, welche dichtend durch ein Filterelement 18 voneinander getrennt sind. Das Filterelement 18 ist bevorzugt ein hohlzylindrisches, zick-zack-förmig gefaltetes Filterelement und weist eine untere Endscheibe 19 und eine obere Endscheibe 20 auf. In die untere Endscheibe 19 ist ein Druckregulierventil 21 integriert. Das Druckregulierventil sorgt bei einer Verblockung oder Verstopfung des Filterelements 18 für eine Umgehung des Filterelements 18 und einen direkten Durchlass von der Roh- in die Reinseite. Dadurch ist es einfach möglich, Schäden von der Brennkraftmaschine abzuwenden. Im Inneren des Filterelements 18 ist ein Stützrohr 22 zur Stabilisierung des Filtermediums gegen Druckpulsation angeordnet, welches Öffnungen 23 aufweist. Mit der Abschlussplatte 13 und der Deckelplatte 14 ist weiterhin eine Volumenkontur 35 bevorzugt aus Metall verbunden, welche einerseits die Zulauföffnung 16 beinhaltet und sich andererseits in den Zylinderkopf 11 erstreckt. Dadurch wird ein Verdrängungsraum 24 gebildet. Die zu filtrierende Flüssigkeit, insbesondere das Schmieröl der Brennkraftmaschine, strömt durch eine hier nicht dargestellte Öffnung aus dem Zylinderkopf 11 und durchströmt anschließend die Zulauföffnung 16 in den Verdrängungsraum 24 und von dort über eine Durchlassöffnung 25 in den rohseitigen Raum des Flüssigkeitswechselfilters 10. Im Verdrängungsraum 24 ist eine Rücklaufsperrmembran 26 mittels eines Halters 33 befestigt. Die Rücklaufsperrmembran 26 ist dabei bevorzugt aus einem flexiblen, elastischen Kunststoff oder einem Gummimaterial gebildet und sorgt für ein Verschließen der Öffnung 16 im Stillstand der Brennkraftmaschine. Konzentrisch im Flüssigkeitswechselfilter 10 ist im Bereich der Verbindung zwischen Flüssigkeitswechselfilter 10 und Zylinderkopf 11 ein Verbindungskragen 27 angeordnet. Dieser ist fest mit der Abschlussplatte 13 und der Volumenkontur 35 verbunden, und weist in dem Bereich, welcher über den Flüssigkeitswechselfilter 10 hinausragt, ein Außengewinde zur Herstellung einer Gewindeverbindung 34 mit dem Zylinderkopf 11 auf. Im Inneren des Verbindungskragens 27 im Bereich der Verbindung mit dem Zylinderkopf 11 ist ein Rücklaufsperrventil 28 angeordnet. Das Rücklaufsperrventil 28 weist einen Ventilsitz 29, eine Druckfeder 30, welche über Halterungen 31 als Gegenlager gehalten werden, und einen Ventilteller 32 auf, wobei der Ventilteller 32 durch die Kraft der Druckfeder 30 zur Herstellung einer dichten Verbindung im stehenden Zustand der Brennkraftmaschine auf den Ventilsitz 29 gepresst wird. Das Rücklaufsperrventil 28 ist direkt in der Ablauföffnung 17 des Flüssigkeitswechselfilters 10 integriert und hat ebenfalls den Sinn, ein Leerlaufen des Filters bei stehender Brennkraftmaschine zu verhindern. Dadurch, dass das Rücklaufsperrventil 28 in der Ablauföffnung 17 und die Rücklaufsperrmembran 26 innerhalb des Verdrängungsraums 24 angeordnet sind, ergibt sich der Vorteil, dass bei einem stehend angeordneten Flüssigkeitswechselfilter 10 im Wartungs- und Demontagefall kein Öl aus dem Flüssigkeitswechselfilter hinauslaufen kann und somit eine Verschmutzung der Umgebung und der Umwelt vermieden wird.

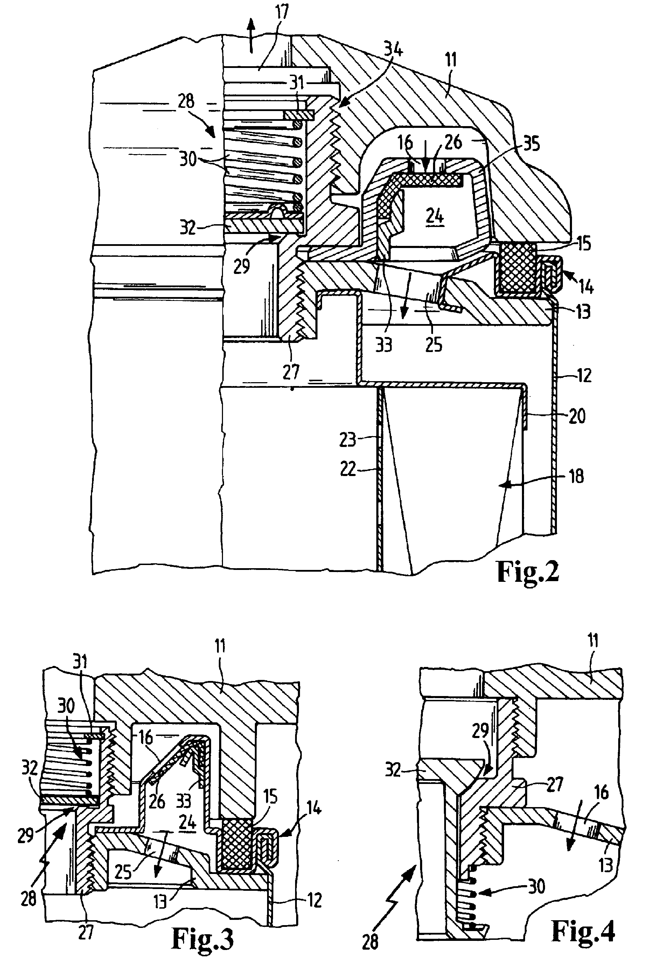

Die Figur 2 zeigt noch einmal eine Vergrößerung des in der Figur 1 als Bereich Z angegebenen Bereichs. Hier ist beispielsweise besser zu erkennen, wie die Druckfeder 30 über die Halterungen 31, welche mittels des Verbindungskragens 27 gebildet werden, als Gegenlager gehalten wird und dann den Ventilteller 32 auf den Ventilsitz 29 presst.

Die Figuren 3 bis 10 zeigen weitere Ausgestaltungen im Bereich Z der Figur 1, wobei gleiche Elemente mit den gleichen Bezugszeichen versehen sind.

Die Figur 3 zeigt eine Variante, in der die Zulauföffnung 16 nicht parallel zum Filterelement 18 gehalten ist, sondern ungefähr im Winkel von 45 ° dazu angeordnet ist. Die übrigen Elemente sind denen der Figuren 1 und 2 gleichzusetzen. Diese schräg gestellte Lösung der Zulauföffnung 16 hat den Vorteil, den Halter 33 der Rücklaufsperrmembran 26 als Klemmring ausführen zu können, oder sogar diesen alternativ an der Sperrmembran anzuspritzen. Desweiteren ergibt sich so ein Schutz der Rücklaufsperrmembran 26, wenn die durch den Zylinderkopf 11 einströmende Flüssigkeit nicht direkt auf die Rücklaufsperrmembran 26 trifft, sondern nur in einem Winkel.

Die Figur 4 zeigt eine alternative Anordnung des Rücklaufsperrventils 28. Hierbei ist der Ventilsitz 29 durch den Verbindungskragen 27 gebildet und der Ventilteller 32 wird durch eine entgegen gesetzte Anordnung der Druckfeder 30 auf den Ventilsitz 29 gezogen anstatt gedrückt zu werden.

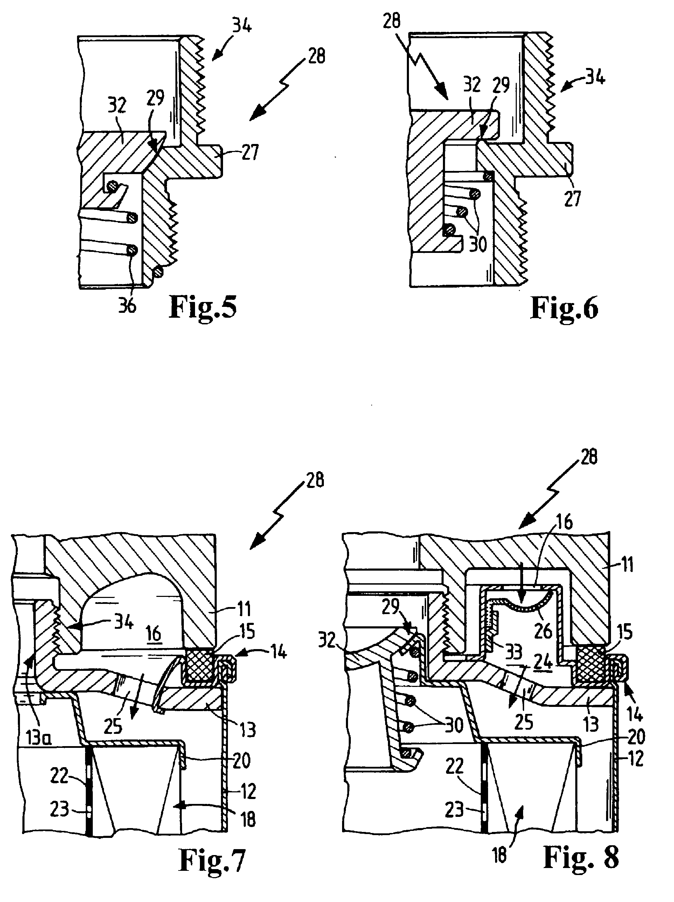

Die Figur 5 zeigt eine weitere Möglichkeit der Ausführung des Rücklaufsperrventils 28. Hier wird der Ventilteller 32 über eine Zugfeder 36 auf den Ventilsitz 29 gezogen. Der Ventilsitz 29 liegt wiederum im Verbindungskragen 27, wobei auch die Verankerung der Zugfeder durch den Verbindungskragen 27 realisiert wird.

Der Ventilsitz 32 der Figur 6 wird durch eine konische Druckfeder 30 auf den Ventilsitz 29 gepresst und gleichzeitig zentriert. Der Ventilsitz 29 ist wiederum durch den Verbindungskragen 27 realisiert.

Die Figur 7 zeigt eine Variation, bei der der Verbindungskragen 27 durch eine spezielle Ausgestaltung der Abschlussplatte 13 realisiert ist. Da hier der Verdrängungsraum 24 nicht genutzt ist, ist die Zulauföffnung 16 in der Abschlussplatte 13 realisiert. Die Abschlussplatte 13 wird dabei bevorzugt im Tiefziehverfahren derart gestaltet, dass sich im Inneren ein konzentrischer Ringkragen 13a bildet, welcher dann eine Schraubverbindung 34 mit dem Zylinderkopf 11 eingehen kann.

In der Figur 8 bildet die Deckelplatte 14 den Verdrängungsraum 24. In der Deckelplatte 14 ist dann die Zulauföffnung 16 realisiert, wobei an der Deckelplatte 14 über die Halterung 33 wiederum eine Rücklaufsperrmembran 26 angeordnet ist. Die aus dem Zylinderkopf 11 kommende Flüssigkeit läuft also durch die Zulauföffnung 16 in den Verdrängungsraum 24 und von dort über die Durchlassöffnung 25 innerhalb der Abschlussplatte 13 in den rohseitigen Raum des Flüssigkeitswechselfilters 10. Das Gegenlager für die Druckfeder 30 des Rücklaufsperrventils 28 wird hier durch die obere Endscheibe 20 des Filterelementes 18 gebildet. Gleichzeitig bildet die Endscheibe 20 auch den Ventilsitz 29 für den Ventilteller 32.

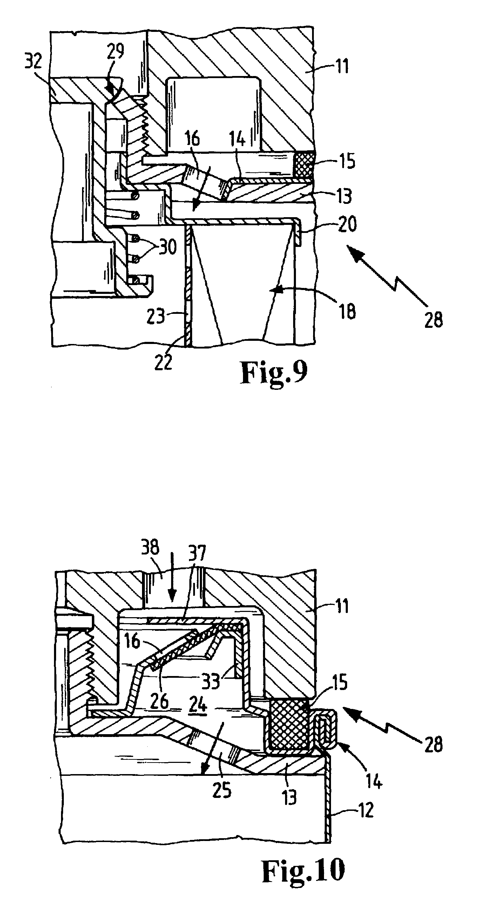

Alternativ kann dabei auch, wie in Figur 9 gezeigt, der Ventilsitz 29 durch eine geeignete Ausformung der Abschlussplatte 13 gebildet werden, wobei die obere Endscheibe 20 nur als Gegenlager für die Druckfeder 30 wirkt. Der Dichtsitz des Rücklaufsperrventils 28 wird durch den Ventilsitz 29 der Abschlussplatte und den Ventilteller 32 ausgebildet.

Zum Schutz der Rücklaufsperrmembran 26 kann gemäß Figur 10 auch ein Prallblech 37 mit aus der Deckelplatte 14 ausgeformt sein, welches die Rücklaufsperrmembran 26 über einen gewissen Bereich überdeckt, und dadurch einen direkten Kontakt der einströmenden Flüssigkeit mit der Rücklaufsperrmembran 26 verhindert. Hier ist zu erkennen, dass die Flüssigkeit durch eine Zuführöffnung 38 gebildet im Zylinderkopf 11 direkt auf die Rücklaufsperrmembran 26 auftreffen würde.

## Patentansprüche

1. Flüssigkeitswechselfilter (10), insbesondere für das Schmieröl einer Brennkraftmaschine, aufweisend ein im wesentlichen topfförmiges Gehäuse (12), mit einer konzentrisch angeordneten Abflussöffnung für die gereinigte Flüssigkeit und wenigstens einer Zuflussöffnung für die zu reinigende Flüssigkeit, einem dichtend zwischen Zuflussöffnung (16) und Abflussöffnung (17) angeordneten Filterelement (18), wobei das Gehäuse (12) über eine Bördelung mit einer Deckelplatte (14) verbunden ist und die Deckelplatte mit einer Abschlussplatte (13) verbunden ist, wobei konzentrisch im Bereich der Abschlussplatte (13) ein Mittel zur lösbaren Verbindung des Flüssigkeitswechselfilters mit einem Gegenpart angeordnet ist, wobei sich das Mittel zur Verbindung axial über die Kontur des Flüssigkeitswechselfilters hinaus erstreckt, wobei das Mittel zur lösbaren Verbindung einstückig aus der Abschlussplatte (13) gebildet ist, wobei die Abschlussplatte (13) weiterhin wenigstens eine Öffnung (25), die mit der wenigstens einen Zuflussöffnung (16) korrespondiert, aufweist, wobei in der Abflussöffnung (17) im Bereich des Mittels zur lösbaren Verbindung ein Rücklaufsperrventil (28) angeordnet ist, wobei das Rücklaufsperrventil axial außerhalb der wirksamen Filterelementfläche angeordnet ist, wobei die Deckelplatte (14) am äußeren axialen Ende ein Dichtmittel (15) zur Abdichtung der Verbindung zwischen Flüssigkeitswechselfilter und Gegenpart aufweist und wobei die Deckelplatte (14) einen Verdrängungsraum (24) umschließt, welcher in einem Zuflussraum im Gegenpart anordenbar ist, derart, dass die Zuflussöffnung (16) in der Deckelplatte (14) im Bereich des Verdrängungsraumes (24) angeordnet ist, wobei im Bereich des Verdrängungsraumes eine Rücklaufsperrmembran (26) angeordnet ist, derart dass die Flüssigkeit aus dem ausgebauten Flüssigkeitswechselfilter (10) und die Flüssigkeit innerhalb des Verdrängungsraumes (24) nicht herauslaufen kann.

2. Flüssigkeitswechselfilter nach Anspruch 1, **dadurch gekennzeichnet, dass** das Mittel zur lösbaren Verbindung ein konzentrischer Ringkragen mit einem Außengewinde ist.

3. Flüssigkeitswechselfilter nach einem der Ansprüche 1 bis 2, **dadurch gekennzeichnet, dass** das Mittel zur lösbaren Verbindung lösbar oder unlösbar dichtend mit der Abschlussplatte (13) verbunden ist, wobei die Abschlussplatte weiterhin wenigstens eine Öffnung (25), die mit der wenigstens einen Zuflussöffnung (16) korrespondiert, aufweist.

4. Flüssigkeitswechselfilter nach einem der vorhergehenden Ansprüche, **dadurch gekennzeichnet, dass** das Rücklaufsperrventil (28) ein Federmittel (30) zur Herstellung eines Presssitzes auf einer Dichtfläche (29) beinhaltet, wobei das Federmittel druckbelastet ist.

5. Flüssigkeitswechseifilter nach einem der Ansprüche 1 bis 3, **dadurch gekennzeichnet, dass** das Rücklaufsperrventil ein Federmittel (36) zur Herstellung eines Presssitzes auf einer Dichtfläche (29) beinhaltet, wobei das Federmittel zugbelastet ist.

6. Flüssigkeitswechselfilter nach einem der vorhergehenden Ansprüche, **dadurch gekennzeichnet, dass** die Rücklaufsperrmembran (26) unlösbar mit der Deckelplatte verbunden ist.

## Claims

1. Replaceable liquid filter (10), in particular for the lubricating oil of an internal combustion engine, featuring a substantially pot-shaped housing (12), with a concentrically disposed outlet opening for the cleaned liquid and at least one inflow opening for the liquid to be cleaned, a filter element (18) disposed sealingly between inflow opening (16) and outlet opening (17), the housing (12) being connected with a cover plate (14) by means of a beading and the cover plate being connected with an end plate (13), a means for the detachable connection of the replaceable liquid filter being disposed concentrically in the area of the cover plate (13) with a counterpart, the means for the connection extending axially beyond the contour of the replaceable liquid filter, the means for the detachable connection being formed in one piece from the cover plate (13), the end plate (13) featuring furthermore at least one opening (25) which corresponds with the at least one inflow opening (16), a return check valve (28) being disposed in the outlet opening (17) in the area of the means for the detachable connection, the return check valve being disposed axially outside of the active filter element surface, the cover plate (14) featuring at the outer axial end a sealant (15) for sealing the connection between replaceable liquid filter and counterpart and the cover plate (14) enclosing a displacement space (24) which can be disposed in an inflow space in the counterpart such that the inflow opening (16) in the cover plate (14) is disposed in the area of the displacement space (24), an anti-drain membrane (26) being disposed in the area of the displacement space such that the liquid in the removed replaceable liquid filter (10) and the liquid in the displacement space (24) is prevented from leaking.

2. Replaceable liquid filter according to claim 1, **characterized in that** the means for the detachable connection is a concentric annular collar with an external thread.

3. Replaceable liquid filter according to one of the claims 1 to 2, **characterized in that** the means for the detachable connection is sealingly connected detachably or undetachably with the end plate (13), the end plate featuring furthermore at least one opening (25) which corresponds with the at least one inflow opening (16).

4. Replaceable liquid filter according to one of the above claims, **characterized in that** the return check valve (28) includes an elastic means (30) for generating a press fit on a sealing surface (29), the elastic means being under pressure.

5. Replaceable liquid filter according to one of the claims 1 to 3, **characterized in that** the return check valve (28) includes an elastic means (36) for generating a press fit on a sealing surface (29), the elastic means being tensile-loaded.

6. Replaceable liquid filter according to one of the above claims, **characterized in that** the anti-drain membrane (26) is connected undetachably with the cover plate.

## Revendications

1. Filtre à liquide échangeable (10), notamment pour l'huile de lubrification d'un moteur à combustion interne, présentant un boîtier (12) essentiellement en forme de pot avec une ouverture de sortie disposée de manière concentrique pour le liquide nettoyé et au moins une ouverture d'entrée pour le liquide à nettoyer, un élément filtrant (18) disposé de manière étanche entre l'ouverture d'entrée (16) et l'ouverture de sortie (17), le boîtier (12) étant relié au moyen d'un bord rabattu à une plaque de couverture (14) et la plaque de couverture étant reliée à une plaque d'extrémité (13), un moyen de liaison amovible du filtre à liquide échangeable avec contrepartie étant disposé de manière concentrique dans la zone de la plaque d'extrémité (13), le moyen de liaison s'étendant en sens axial au-delà du contour du filtre à liquide échangeable, le moyen de liaison amovible étant formé en un bloc à partir de la plaque d'extrémité (13), la plaque d'extrémité (13) présentant en outre au moins une ouverture (25) qui correspond avec l'ouverture d'entrée, au moins au nombre d'une, une soupape anti-retour (28) étant disposée dans l'ouverture de sortie (17) à proximité du moyen de liaison amovible, la soupape anti-retour étant disposée en sens axial hors de la surface efficace de l'élément filtrant, la plaque de couverture (14) étant dotée à l'extrémité extérieure axiale d'un élément d'étanchéité (15) destiné à étancher la liaison entre le filtre à liquide échangeable et la contrepartie et la plaque de couverture (14) encerclant une zone de refoulement (24) qui peut être positionnée dans une zone d'entrée dans la contrepartie, de sorte que l'ouverture d'entrée (16) dans la plaque de couverture (14) soit disposée dans la zone de refoulement (24), une membrane anti-retour (26) étant disposée dans la zone de refoulement, de sorte que le liquide ne puisse pas s'écouler du filtre à liquide échangeable (10) démonté et que le liquide ne puisse pas 's'écouler à l'intérieur de la zone de refoulement.

2. Filtre à liquide échangeable selon la revendication 1, **caractérise en ce que** le moyen de liaison amovible est un collet annulaire concentrique avec un filet extérieur.

3. Filtre à liquide échangeable selon l'une des revendications 1 à 2, **caractérisé en ce que** le moyen de liaison amovible est relié de manière étanche, amovible ou non amovible, à la plaque d'extrémité (13), la plaque d'extrémité présentant en outre au moins une ouverture (25) qui correspond avec l'ouverture d'entrée (16), au moins au nombre d'une.

4. Filtre à liquide échangeable selon l'une des revendications précédentes, **caractérisé en ce que** la soupape anti-retour (28) comprend un moyen élastique (30) destiné à générer un ajustage serré sur une surface d'étanchéité (29), le moyen élastique étant soumis à une pression.

5. Filtre à liquide échangeable selon l'une des revendications 1 à 3, **caractérisé en ce que** la soupape anti-retour comprend un moyen élastique (36) destiné à générer un ajustage serré sur une surface d'étanchéité (29), le moyen élastique étant soumis à une traction.

6. Filtre à liquide échangeable selon l'une des revendications précédentes, **caractérisé en ce que** la membrane anti-retour (26) est reliée de manière non amovible à la plaque de couverture.
